# EUROPÄISCHE PATENTSCHRIFT

(11) **EP 3 469 704 B1**
(45) Veröffentlichungstag und Bekanntmachung des Hinweises auf die Patenterteilung: **01.03.2023**
(21) Anmeldenummer: 17720451.8
(22) Anmeldetag: 26.04.2017
(51) Int. Cl.: H02P 6/18, H02P 21/24

(54) **VERFAHREN ZUR ANPASSUNG EINER AMPLITUDE EINER SPANNUNGSINJEKTION EINER MITTELS EINES PWM-GESTEUERTEN WECHSELRICHTERS GESPEISTEN, ROTIERENDEN, MEHRPHASIGEN, ELEKTRISCHEN MASCHINE**
METHOD FOR ADJUSTING AN AMPLITUDE OF A VOLTAGE INJECTION OF A ROTATING, MULTI-PHASE ELECTRIC MACHINE, WHICH ELECTRIC MACHINE IS FED BY MEANS OF A PWM-CONTROLLED INVERTER
PROCÉDÉ D'ADAPTATION D'UNE AMPLITUDE D'UNE INJECTION DE TENSION D'UNE MACHINE ÉLECTRIQUE, POLYPHASÉE, TOURNANTE ET ALIMENTÉE AU MOYEN D'UN ONDULEUR À COMMANDE PAR MODULATION D'IMPULSIONS EN DURÉE

(30) Priorität: 13.06.2016 DE 102016210443
(43) Veröffentlichungstag der Anmeldung: 17.04.2019
(73) Patentinhaber: Robert Bosch GmbH, 70442 Stuttgart (DE)
(72) Erfinder: ROETZER, Marco, 78736 Epfendorf (DE); VOLLMER, Ulrich, 73235 Weilheim (DE)
(86) Internationale Anmeldenummer: PCT/EP2017/059900
(87) Internationale Veröffentlichungsnummer: WO 2017/215822

(56) Entgegenhaltungen:
- US-A1- 2016 149 443
- SHUN TANIGUCHI ET AL: "Control Method for Harmonic Voltage Injection to Achieve Noise Reduction in Position-Sensorless Control of Permanent-Magnet Synchronous Motors at Low Speeds", ELECTRICAL ENGINEERING IN JAPAN, Bd. 179, Nr. 3, 22. Mai 2012 (2012-05-22), Seiten 49-56, XP055389850, US ISSN: 0424-7760, DOI: 10.1002/eej.21246

## Beschreibung

### Stand der Technik

Die Erfindung betrifft ein Verfahren zur Anpassung einer Amplitude einer Spannungsinjektion bei einer Bestimmung einer Rotorlage einer mittels eines PWM-gesteuerten Wechselrichters gespeisten, rotierenden, mehrphasigen, elektrischen Maschine durch ein anisotropiebasiertes Verfahren.

Solch ein Verfahren ist beispielsweise im Artikel "Audible Noise Reduction Method in IPMSM Position Sensorless Control based on High-Frequency Current Injection" von Yuki Tauchi et al. offenbart, welcher 2014 auf der "International Power Electronics Conference" des IEEE veröffentlicht wurde. Mittels der Anpassung der Amplitude der Spannungsinjektion lässt sich das Signal-Rausch-Verhältnis der ermittelten Rotorlage beeinflussen. Bei schnellen Drehzahländerungen ist es notwendig die Filterzeitkonstante der Rotorlagenbestimmung zu reduzieren, so dass die berechnete Rotorlage der realen Rotorlage ohne zu große Verzögerung folgt. Damit die berechnete Rotorlage trotzdem nicht zu stark verrauscht ist, muss das Signal-Rausch-Verhältnis verbessert werden, indem die Amplitude der Spannungsinjektion vergrößert wird. Entsprechend kann bei einer konstanten Drehzahl der Maschine die Filterzeitkonstante vergrößert werden, wodurch das Signal-Rausch-Verhältnis verbessert wird. Somit kann auch die Amplitude der Spannungsinjektion verringert werden. In dem genannten Artikel wird zur Anpassung der Amplitude der Spannungsinjektion die Abweichung zwischen einer Soll-Drehzahl und einer Ist-Drehzahl der elektrischen Maschine bestimmt und in Abhängigkeit von dieser Abweichung die Amplitude der hochfrequenten Spannungsinjektion angepasst.

Bei der geberlosen Regelung wird versucht, die Rotorlage einer elektrischen Maschine ohne Verwendung eines Positionssensors zu ermitteln. Dabei können sogenannte anisotropiebasierte Verfahren zum Einsatz kommen, welche die Rotorlage über die magnetische Anisotropie des Rotors bestimmen. Bei diesen anisotropiebasierten Verfahren erfolgt zusätzlich zur Einspeisung einer zu stellenden Spannung für die elektrische Maschine noch eine hochfrequente Spannungsinjektion, welche eine hochfrequente Stromänderung in den Phasenströmen der elektrischen Maschine zur Folge hat. Diese Stromänderung enthält Informationen über die Rotorlage und somit lässt sich aus der Stromänderung über einen geeigneten Modellansatz die Rotorlage bestimmen.Ein ähnlicher Ansatz wird in "Control Method for Harmonic Voltage Injection to Achieve Noise Reduction in Position-Sensorless Control of Permanent-Magnet Synchronous Motors at Low Speeds", von Shun Taniguchi; Toshihiro Homma; Shinji Wakao; Keiichiro Kondo; Takashi Yoneyama, XP055389850, John Wiley & Sons, Inc, offenbart.

### Offenbarung der Erfindung

Die Erfindung betrifft ein Verfahren zur Anpassung einer Amplitude einer Spannungsinjektion einer mittels eines PWM-gesteuerten Wechselrichters gespeisten, rotierenden, mehrphasigen, elektrischen Maschine, mit wenigstens folgenden Verfahrensschritten:
a. Bestimmen eines vorbestimmten Stromvektors zu einem ersten Zeitpunkt, welcher zu einem zweiten Zeitpunkt an der Maschine anliegen würde, mittels einer Spannungsgleichung der elektrischen Maschine, in Abhängigkeit von einer in einer Regelung zur Ansteuerung der elektrischen Maschine vorbestimmten Spannung, einem aus zum ersten Zeitpunkt gemessenen Phasenströmen bestimmten Stromvektor und einer Drehzahl der Maschine, wobei der erste Zeitpunkt vor dem zweiten Zeitpunkt liegt,
b. Bestimmen eines an der Maschine zum zweiten Zeitpunkt anliegenden realen Stromvektors in Abhängigkeit von zum zweiten Zeitpunkt gemessenen Phasenströmen der Maschine,
c. Bilden einer Stromvektordifferenz zwischen dem vorbestimmten Stromvektor und dem realen Stromvektor zum zweiten Zeitpunkt,
d. Anpassen der Amplitude der Spannungsinjektion in Abhängigkeit von der gebildeten Stromvektordifferenz.

Vorteilhaft ist hierbei, dass die Stromvektordifferenz mit der Abweichung zwischen berechneter und tatsächlicher Rotorlage der Maschine korreliert, wobei diese Abweichung insbesondere bei schnellen Drehzahländerungen größer wird. Durch die Anpassung der Amplitude der Spannungsinjektion kann das Signal-Rausch-Verhältnis beeinflusst werden und somit kann mittels des Verfahrens auf die Dynamik der elektrischen Maschine reagiert werden. Hierdurch kann erreicht werden, dass durch die Anpassung der Amplitude das Signal-Rausch-Verhältnis der ermittelten Rotorlage ausreichend gut ist und gleichzeitig die Geräuschentwicklung aufgrund der Spannungsinjektion möglichst gering gehalten wird. Zudem wird erreicht, dass die Anpassung der Amplitude der Spannungsinjektion innerhalb weniger Abtastschritte der Regelung der elektrischen Maschine erfolgt, wodurch das Verfahren auch für hochdynamische Systeme geeignet ist.

In einer vorteilhaften Ausgestaltung des erfindungsgemäßen Verfahrens ist vorgesehen, dass im Verfahrensschritt d die Amplitude der Spannungsinjektion derartig angepasst wird, dass je stärker die Stromvektordifferenz von Null abweicht, desto größer wird die Amplitude der Spannungsinjektion gewählt. Vorteilhaft ist hierbei, dass auf die Dynamik der elektrischen Maschine reagiert werden kann. So ist es bei schnellen Drehzahländerungen nötig, die Filterzeitkonstante beim anisotropiebasierten Verfahren zu reduzieren, so dass die berechnete Rotorlage der realen Rotorlage ohne zu große Verzögerung folgt. Die Größe der Stromvektordifferenz korreliert hierbei mit der Größe der Drehzahländerung der Maschine und auch mit der Abweichung zwischen berechneter und realer Rotorlage der elektrischen Maschine. Somit kann bei einer großen Stromvektordifferenz auf eine schnelle Drehzahländerung geschlossen werden und es sollte die Filterkonstante des anisotropiebasierten Verfahrens reduziert werden. Damit das Signal-Rausch-Verhältnis trotzdem ausreichend gut bleibt, um eine möglichst exakte Bestimmung der Rotorlage der elektrischen Maschine durchzuführen, wird die Amplitude der Spannungsinjektion erhöht. Wird dagegen eine langsame Drehzahländerung, sprich eine kleine Stromvektordifferenz, ermittelt, kann die Filterkonstante erhöht werden, weswegen bereits eine Spannungsinjektion mit einer kleinen Amplitude für ein gutes Signal-Rausch-Verhältnis ausreichend ist. Durch die kleine Amplitude wird die Geräuschentwicklung aufgrund der Rotorlagenberechnung möglichst gering gehalten.

Gemäß einer vorteilhaften Ausgestaltung des erfindungsgemäßen Verfahrens ist vorgesehen, dass zwischen dem Verfahrensschritt c und dem Verfahrensschritt d ein Verfahrensschritt e erfolgt, in welchem die Stromvektordifferenz hochpassgefiltert wird.

Vorteilhaft ist hierbei, dass die Amplitude der Spannungsinjektion nicht aufgrund von Modellfehlern angepasst wird. So kann durch Modellfehler auch ohne Drehzahländerung eine Stromvektordifferenz entstehen, welche ansonsten zu einer Anpassung der Amplitude der Spannungsinjektion führen würde.

Gemäß einer weiteren vorteilhaften Ausgestaltung des erfindungsgemäßen Verfahrens ist vorgesehen, dass zwischen dem Verfahrensschritt c und dem Verfahrensschritt d ein Verfahrensschritt f erfolgt, in welchem der Betrag der Stromvektordifferenz gebildet wird.

Vorteilhaft ist hierbei, dass sowohl auf eine negative als auch eine positive Stromvektordifferenz identisch reagiert werden kann und die Amplitude der Spannungsinjektion entsprechend für beide Fälle angepasst wird.

### Zeichnungen

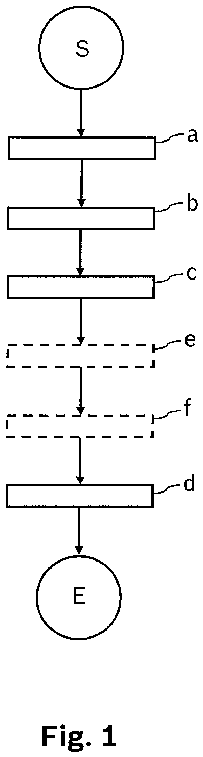

Fig. 1 zeigt ein Ausführungsbeispiel des erfindungsgemäßen Verfahrens zur Anpassung einer Amplitude einer Spannungsinjektion einer mittels eines PWM-gesteuerten Wechselrichters gespeisten, rotierenden, mehrphasigen, elektrischen Maschine.

### Beschreibung von Ausführungsbeispielen

Fig. 1 zeigt ein Ausführungsbeispiel des erfindungsgemäßen Verfahrens zur Anpassung einer Amplitude einer Spannungsinjektion einer mittels eines PWM-gesteuerten Wechselrichters gespeisten, rotierenden, mehrphasigen, elektrischen Maschine. Dieses Verfahren kann insbesondere in einem anisotropiebasierten Verfahren genutzt werden, welches die Rotorlage einer mittels eines PWM-gesteuerten Wechselrichters gespeisten, rotierenden, mehrphasigen, elektrischen Maschine, sprich einem Drehstrommotor, bestimmt. Beim erfindungsgemäßen Verfahren wird in einem Verfahrensschritt a zu einem ersten Zeitpunkt ein vorbestimmter Stromvektor bestimmt, welcher zu einem zweiten Zeitpunkt an einer mittels eines PWM-gesteuerten Wechselrichters gespeisten, rotierenden, mehrphasigen, elektrischen Maschine anliegen würde.

Der vorbestimmte Stromvektor wird mittels einer Spannungsgleichung der elektrischen Maschine bestimmt. Diese Bestimmung erfolgt in Abhängigkeit von einer in einer Regelung zur Ansteuerung der elektrischen Maschine vorbestimmten Spannung, einem aus zum ersten Zeitpunkt gemessenen Phasenströmen bestimmten Stromvektor und einer Drehzahl der Maschine. Der Stromvektor stellt dabei die transformierten Phasenströme der elektrischen Maschine dar. Anschließend wird in einem Verfahrensschritt b ein zum zweiten Zeitpunkt an der Maschine anliegender realer Stromvektor bestimmt. Hierbei werden die Phasenströme der elektrischen Maschine gemessen und hieraus mittels einer Transformation der reale Stromvektor bestimmt. Aus dem vorbestimmten Stromvektor und dem realen Stromvektor wird in einem Verfahrensschritt c eine Stromvektordifferenz gebildet. Dies kann beispielsweise realisiert werden, indem der zum ersten Zeitpunkt vorbestimmte Stromvektor über ein Verzögerungsglied geleitet wird, welches die Dauer zwischen dem ersten Zeitpunkt und dem zweiten Zeitpunkt überbrückt, und dann zum zweiten Zeitpunkt zusammen mit dem realen Stromvektor zum zweiten Zeitpunkt einem Subtraktionsknoten zugeführt wird, welcher die Stromvektordifferenz bildet. Anschließend wird in einem Verfahrensschritt d die Amplitude der Spannungsinjektion in Abhängigkeit von der zuvor gebildeten Stromvektordifferenz angepasst. Dies kann beispielsweise erfolgen indem aus der Stromdifferenz ein Faktor bestimmt wird, welcher zusätzlich in die Modulation der Spannungsinjektion einfließt, die üblicherweise in Abhängigkeit von der berechneten Rotorlage moduliert wird. Anschließend wird das Verfahren beendet. Optional erfolgt zwischen dem Verfahrensschritt c und dem Verfahrensschritt d noch ein Verfahrensschritt e oder auch ein Verfahrensschritt f. Im Verfahrensschritt e wird die Stromvektordifferenz hochpassgefiltert. Im Verfahrensschritt f wird der Betrag der Stromvektordifferenz gebildet, welcher die Länge der Stromvektordifferenz darstellt. Zudem kann im Verfahrensschritt d auch noch die Filtereigenschaften eines Winkelbeobachters des anisotropiebasierten Verfahrens zur Bestimmung der Rotorlage an die Amplitude der Spannungsinjektion angepasst werden. Das Verfahren kann beispielsweise zu jedem neuen Abtastschritt der Regelung der elektrischen Maschine neu gestartet werden, wodurch die Verfahren parallel ablaufen.

## Patentansprüche

1. Verfahren zur Anpassung einer Amplitude einer Spannungsinjektion einer mittels eines PWM-gesteuerten Wechselrichters gespeisten, rotierenden, mehrphasigen, elektrischen Maschine mit den Verfahrensschritten:
a. Bestimmen eines vorbestimmten Stromvektors zu einem ersten Zeitpunkt, welcher zu einem zweiten Zeitpunkt an der Maschine anliegen würde, mittels einer Spannungsgleichung der elektrischen Maschine, in Abhängigkeit von einer in einer Regelung zur Ansteuerung der elektrischen Maschine vorbestimmten Spannung, einem aus zum ersten Zeitpunkt gemessenen Phasenströmen bestimmten Stromvektor und einer Drehzahl der Maschine, wobei der erste Zeitpunkt vor dem zweiten Zeitpunkt liegt,
b. Bestimmen eines an der Maschine zum zweiten Zeitpunkt anliegenden realen Stromvektors in Abhängigkeit von zum zweiten Zeitpunkt gemessenen Phasenströmen der Maschine,
c. Bilden einer Stromvektordifferenz zwischen dem vorbestimmten Stromvektor und dem realen Stromvektor zum zweiten Zeitpunkt,
d. Anpassen der Amplitude der Spannungsinjektion in Abhängigkeit von der gebildeten Stromvektordifferenz.

2. Verfahren nach Anspruch 1, **dadurch gekennzeichnet, dass** im Verfahrensschritt d die Amplitude der Spannungsinjektion derartig angepasst wird, dass je stärker die Stromvektordifferenz von Null abweicht, desto größer wird die Amplitude der Spannungsinjektion gewählt.

3. Verfahren nach einem der Ansprüche 1 oder 2, **dadurch gekennzeichnet, dass** zwischen dem Verfahrensschritt c und dem Verfahrensschritt d ein Verfahrensschritt e erfolgt, in welchem die Stromvektordifferenz hochpassgefiltert wird.

4. Verfahren nach einem der Ansprüche 1 bis 3, **dadurch gekennzeichnet, dass** zwischen dem Verfahrensschritt c und dem Verfahrensschritt d ein Verfahrensschritt f erfolgt, in welchem der Betrag der Stromvektordifferenz gebildet wird.

## Claims

1. Method for adjusting an amplitude of a voltage injection of a rotating, multi-phase electric machine that is fed by means of a PWM-controlled inverter, having the method steps of:
a. determining at a first time a predetermined current vector that would be present at the machine at a second time, by way of a voltage equation of the electric machine, in dependence on a voltage predetermined in a controller for actuating the electric machine, a current vector determined from phase currents measured at the first time, and a speed of the machine, wherein the first time is located before the second time,
b. determining a real current vector present at the machine at the second time in dependence on phase currents of the machine measured at the second time,
c. forming a current vector difference between the predetermined current vector and the real current vector at the second time,
d. adjusting the amplitude of the voltage injection in dependence on the current vector difference formed.

2. Method according to Claim 1, **characterized in that**, in method step d, the amplitude of the voltage injection is adjusted such that the more the current vector difference deviates from zero, the greater the amplitude of the voltage injection is selected.

3. Method according to either of Claims 1 and 2, **characterized in that** a method step e, in which the current vector difference is high-pass filtered, is performed between the method step c and the method step d.

4. Method according to one of Claims 1 to 3, **characterized in that** a method step f, in which the absolute value of the current vector difference is formed, is performed between the method step c and the method step d.

## Revendications

1. Procédé d'adaptation d'une amplitude d'une injection de tension d'une machine électrique, polyphasée, tournante et alimentée au moyen d'un ondulateur à commande par modulation d'impulsions en durée, avec les étapes de procédé suivantes :
a. détermination d'un vecteur de courant prédéfini à un premier instant, celui-ci devant buter contre la machine à un deuxième instant, à l'aide d'une équation de tension de la machine électrique, en fonction d'une tension prédéfinie dans une règle de commande de la machine électrique, en fonction d'un vecteur de courant définir à partir des courants de phase mesurés au premier instant et en fonction d'une vitesse de rotation de la machine, le premier instant étant prévu avant le deuxième instant ;
b. détermination d'un vecteur de courant réel butant contre la machine à un deuxième instant en fonction de courants de phase de la machine mesurés au deuxième instant ;
c. formation d'une différence de vecteur de courant entre le vecteur de courant prédéfini et le vecteur de courant réel au deuxième instant ;
d. adaptation de l'amplitude de l'injection de tension en fonction de la différence de vecteur de courant formée.

2. Procédé selon la revendication 1, **caractérisé en ce que** dans l'étape de procédé d, l'amplitude de l'injection de tension est adaptée de telle sorte que plus la différence de vecteur de courant s'écarte de zéro, plus l'amplitude de l'injection de tension choisie est importante.

3. Procédé selon l'une quelconque des revendications 1 ou 2, **caractérisé en ce qu'**une étape de procédé e est réalisée entre l'étape de procédé c et l'étape de procédé d au cours de laquelle la différence de vecteur de courant est filtrée au moyen d'un filtre passe-haut.

4. Procédé selon l'une quelconque des revendications 1 à 3, **caractérisé en ce qu'**une étape de procédé g est réalisée entre l'étape de procédé c et l'étape de procédé d au cours de laquelle l'amplitude de la différence de vecteur de courant est formée.
